(19) Europäisches Patentamt
European Patent Office
Office européen des brevets

(11) **EP 3 236 217 A1**

(12) **EUROPÄISCHE PATENTANMELDUNG**

(43) Veröffentlichungstag:
**25.10.2017   Patentblatt 2017/43**

(51) Int Cl.:
***G01F 23/24*** *(2006.01)*

(21) Anmeldenummer: **16000879.3**

(22) Anmeldetag: **19.04.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Linde Aktiengesellschaft**
**80331 München (DE)**

(72) Erfinder: **Hoffmann, Rainer**
**82008 Unterhaching (DE)**

(74) Vertreter: **Meilinger, Claudia Sabine**
**Linde AG**
**Technology & Innovation**
**Corporate Intellectual Property**
**Dr.-Carl-von-Linde-Straße 6-14**
**82049 Pullach (DE)**

(54) **MESSANORDNUNG ZUR MESSUNG EINES FLÜSSIGKEITSSPIEGELS EINES FLUIDS IN EINEM BEHÄLTER, BEHÄLTER MIT DER MESSANORDNUNG UND VERFAHREN ZUM BETREIBEN DER MESSANORDNUNG IN DEM BEHÄLTER**

(57)   Eine Messanordnung (101 - 106) zur Messung eines Flüssigkeitsspiegels (11), welcher eine Flüssigphase (12) von einer Gasphase (13) eines Fluids trennt, in einem Behälter (10), mit einem ersten Sensorelement (1), einem zweiten Sensorelement (2), weiteren Sensorelementen (3), welche auf einem Pfad zwischen dem ersten (1) und dem zweiten (2) Sensorelement angeordnet sind, und einer mit den Sensorelementen (1, 2, 3) gekoppelte Auswerteeinrichtung (4), wobei die Sensorelemente (1, 2, 3) jeweils einen temperaturabhängigen elektrischen Widerstand (Ri) aufweisen und ein Stromfluss durch ein jeweiliges Sensorelement (1, 2, 3) zu einer Erwärmung desselben führt, das erste Sensorelement (1), das zweite Sensorelement (2) und die weiteren Sensorelemente (3) in dem Behälter (10) derart anordenbar sind, dass sich der Flüssigkeitsspiegel (11) in dem Behälter (10) bei bestimmungsgemäßem Gebrauch zwischen dem ersten Sensorelement (1) und dem zweiten Sensorelement (2) befindet, die Auswerteeinrichtung (4) zur Messung zumindest eines Sammelwiderstandswerts (R3) von zumindest einer Auswahl der auf einem Pfad angeordneten Sensorelemente (3) eingerichtet ist, und die Auswerteeinrichtung (4) dazu eingerichtet ist, in Abhängigkeit von dem Sammelwiderstandswert (R3), einem Widerstandswert (Rf) des ersten, in der Flüssigphase (12) angeordneten Sensorelements (1), und einem Widerstandswert (Rg) des zweiten, in der Gasphase (13) angeordneten Sensorelements (2), den Flüssigkeitsspiegel (11) zu ermitteln.

Fig. 1

**Beschreibung**

Die Erfindung betrifft eine Messanordnung zur Messung eines Flüssigkeitsspiegels, welcher eine Flüssigphase von einer Gasphase eines Fluids trennt, in einem Behälter, einen Behälter mit der Messanordnung sowie ein Verfahren zum Betreiben der Messanordnung in dem Behälter.

Fluide, insbesondere kryogene Flüssigkeiten, werden üblicherweise in Behältern aufbewahrt. Da die meisten Flüssigkeiten zum Verbrauch vorgesehen sind, ist es wünschenswert, einen Füllstand eines solchen Flüssigkeitsbehälters zu kennen. Unter dem Füllstand vorliegend wird das Verhältnis des durch die Flüssigkeit beanspruchten Volumens in dem Behälter zu dem Gesamtvolumen des Behälters, welches für die Flüssigkeit zugänglich ist, verstanden. Häufig ist es aufgrund von besonderen Anforderungen nicht möglich, einen Behälter beispielsweise mit einem Schauglas zur einfachen visuellen Kontrolle des Füllstands zu versehen, oder der Behälter befindet sich an einem unzugänglichen Ort. Dann ist eine alternative technische Lösung zur Messung des Füllstands erwünscht.

Insbesondere bei kryogenen Flüssigkeiten sind besondere Anforderungen an einen Behälter zu beachten, da ein solcher Behälter sowohl sehr hohem Innendruck als auch großen Temperaturschwankungen ausgesetzt sein kann. Deshalb sind Behälter für kryogene Flüssigkeiten häufig besonders komplex aufgebaut.

Wird ein solcher Behälter mit einer kryogenen Flüssigkeit befüllt, so bildet sich zwischen der Gasphase und der Flüssigphase des Fluids eine Grenzschicht, der Flüssigkeitsspiegel, aus. Aufgrund der Schwerkraft verläuft ein Normalenvektor bezüglich des Flüssigkeitsspiegels, zumindest nach einer Abklingzeit, parallel zu einem Schwerkraftvektor. Bei bekannter Geometrie des Behälters kann dann von dem Flüssigkeitsspiegel auf den Füllstand geschlossen werden.

Aus der DE 31 25 591 A1 ist ein einfacher Füllstandsmesser zum Messen des Tankinhalts von Kraftfahrzeugen bekannt. Dort ist ein Kraftstoff als Flüssigphase und Luft als Gasphase vorgesehen. In Kraftfahrzeugen sind entsprechende Füllstandsmesser keinem Überdruck oder kryogenen Temperaturen ausgesetzt.

Es ist eine Aufgabe der Erfindung, eine verbesserte Vorrichtung und ein Verfahren zur Messung des Flüssigkeitsspiegels in einem Behälter, insbesondere einem kryogenen Behälter, bereitzustellen.

Diese Aufgabe wird mit einer Messanordnung aufweisend ein erstes Sensorelement, ein zweites Sensorelement, weitere Sensorelemente, welche auf einem Pfad zwischen dem ersten und dem zweiten Sensorelement angeordnet sind, und einer mit den Sensorelementen gekoppelte Auswerteeinrichtung gelöst. Die Sensorelemente weisen jeweils einen temperaturabhängigen elektrischen Widerstand auf, und ein Stromfluss durch ein jeweiliges Sensorelement führt zu einer Erwärmung desselben. Das erste Sensorelement, das zweite Sensorelement und die weiteren Sensorelemente sind in dem Behälter derart anordenbar, dass sich der Flüssigkeitsspiegel in dem Behälter bei bestimmungsgemäßem Gebrauch zwischen dem ersten Sensorelement und dem zweiten Sensorelement befindet. Die Auswerteeinrichtung ist zur Messung zumindest eines Sammelwiderstandswerts von zumindest einer Auswahl der auf einem Pfad angeordneten Sensorelemente eingerichtet. Weiterhin ist die Auswerteeinrichtung dazu eingerichtet, in Abhängigkeit von dem Sammelwiderstandswert, einem ersten Widerstandswert des ersten, in der Flüssigphase angeordneten Sensorelements, und einem zweiten Widerstandswert des zweiten, in der Gasphase angeordneten Sensorelements, den Flüssigkeitsspiegel zu ermitteln.

Ein Sensorelement umfasst insbesondere einen Widerstand, eine Diode, eine Leuchtdiode und/oder einen Temperaturfühler, insbesondere einen Pt100 Temperaturfühler.

Eine Auswahl von Sensorelementen ist beispielsweise eine Mehrzahl von Sensorelementen, die in einer Reihenschaltung mittels zwischengeschalteter Drahtabschnitte miteinander verbunden sind, wobei ein erstes und ein zweites Ende der Reihenschaltung jeweils mit der Auswerteeinrichtung gekoppelt sind. In einer Reihenschaltung muss ein Strom, welcher durch die Reihenschaltung fließt, jedes Element der Reihenschaltung durchfließen.

Die Kopplung mit der Auswerteeinrichtung ermöglicht es, dass die Auswerteeinrichtung den Sammelwiderstandswert der Auswahl von Sensorelementen messen kann. Die Kopplung kann beispielsweise galvanisch mittels eines Drahtabschnitts erfolgen. Alternativ kann die Kopplung auch kapazitiv und/oder induktiv hergestellt werden. Der Sammelwiderstandswert hängt dabei insbesondere auch von der Verschaltung der Auswahl von Sensorelementen ab, wie beispielweise Reihenschaltung oder Parallelschaltung oder Kombinationen hiervon.

Die Auswerteeinrichtung ist für die Messung des Widerstands eines oder einer Auswahl von Sensorelementen oder eines elektrischen Stromes durch die Sensorelemente dazu eingerichtet, eine Spannung an zwei mit der Auswerteeinrichtung verbundene Drahtabschnitte anzulegen. Dies geschieht beispielsweise, durch Aufschalten eines ersten Potentials auf einen ersten Drahtabschnitt und Aufschalten eines zweiten Potentials auf einen zweiten Drahtabschnitt, wobei das erste und das zweite Potential unterschiedliche Werte aufweisen. Ein solches Anlegen oder Aufschalten einer Spannung wird vorliegend als Ansteuern bezeichnet. Bevorzugt ist die Spannung eine Gleichspannung mit konstantem Wert, insbesondere falls Dioden oder LEDs als Sensorelemente eingesetzt werden.

In weiteren Ausführungsformen wird eine Wechselspannung aufgeschaltet. Eine Wechselspannungsmessung kann gegenüber Gleichspannungen und -strömen weniger störanfälliger sein.

Aus der angelegten Spannung und dem sich aufgrund der Spannung ergebenden Stromfluss, lässt sich der Sammelwiderstandswert der angesteuerten Auswahl von Sensorelementen bestimmen. Da es sich bei den Sensorelementen um von ihrer Temperatur abhängige Widerstände handelt, kann sich der Sammelwiderstandswert ändern. Insbesondere, da der Stromfluss durch die angesteuerte Auswahl von Sensorelementen zu einer Erwärmung dieser führt, ist insbesondere kurz nach dem Aufschalten der Spannung der Stromfluss nicht notwendig konstant. Es ist dann möglich, dass der Sammelwiderstandswert nicht sofort eindeutig bestimmbar ist.

Es wird in Ausführungsformen für jede Messung eine gewisse Messdauer vorgesehen, in welcher die einzelnen Sensorelemente, die zu der angesteuerten Auswahl von Sensorelementen gehören, in ein thermodynamisches Gleichgewicht, insbesondere mit konstanter Temperatur, gelangen.

In Ausführungsformen erfasst die Auswerteeinrichtung einen zeitlichen Verlauf in einem vorgegebenen Zeitraum nach dem Beginn des Ansteuerns mit der Spannung. Aus der verlaufskurve kann ein Füllstandzustand ermittelt werden. Der vorgegebene Zeitraum dauert vorzugsweise so lange, bis sich ein stationärer Messwert für den Sammelwiderstandswert ergibt.

Die Auswerteeinrichtung ist vorteilhaft eine elektronische Signalverarbeitungseinrichtung, die dazu eingerichtet ist, analoge und/oder digitale Messsignale an einem Eingang anzunehmen und diese zum Beispiel mittels einer Logikschaltung zu vergleichen. Durch diesen Vergleich der Signale erhält die Auswerteeinrichtung einen Messwert. Vorliegend ist ein Signal insbesondere eine Ansteuerspannung und/oder ein Stromfluss. Hieraus lässt sich der jeweilige Widerstandswert bestimmen. Mit diesem Widerstandswert lässt sich mittels der Auswerteeinrichtung beispielsweise eine Lage des Flüssigkeitsspiegels in dem Behälter bestimmen, z.B. indem der gemessene Widerstandswert mit einem Referenzwiderstandswert verglichen wird. Für eine Lage oder Position Flüssigkeitsspiegels in dem Behälter wird beispielsweise die Position eines der Sensorelemente auf dem Pfad in dem Behälter verwendet.

Das erste Sensorelement ist bevorzugt an einer Stelle in dem Behälter angeordnet, an welcher sich bis zu vollständigen Entleerung des Behälters flüssiges Fluid befindet. Somit ist gewährleistet, dass der Widerstandswert des ersten Sensorelements als ein Referenzwiderstandswert für Sensorelemente, die mit der Flüssigphase des Fluids in Kontakt sind, verwendet werden kann.

Dementsprechend ist das zweite Sensorelement bevorzugt an einer Stelle in dem Behälter angeordnet, an der das Fluid auch bei maximaler Befüllung des Behälters mit gasförmig vorliegt. Somit ist gewährleistet, dass der Widerstandswert des zweiten Sensorelements als Referenzwiderstandswert für Sensorelemente, die mit der Gasphase des Fluids in Kontakt stehen, verwendet werden kann.

Unter Kontakt ist insbesondere Wärmekontakt gemeint, also eine Wärmeableitung oder Dissipation von Wärmeenergie aufgrund eines Temperaturunterschieds zwischen dem jeweiligen Sensorelement und dem umgebenden Medium, der aufgrund der Aufheizung des Sensorelementes bei Stromfluss entsteht, in das umgebende Medium, insbesondere das umgebende Gas oder die Flüssigkeit.

Die Gesamtheit der Sensorelemente ist vorzugsweise auf einem geeigneten Substrat, beispielsweise einem stabförmigen Substrat, montiert. Hierbei ist vorteilhaft, wenn die Verbindung der Sensorelemente mit dem Substrat nicht starr ist, da ansonsten aufgrund von unterschiedlichen Temperaturausdehnungskoeffizienten der verwendeten Materialien das Risiko eines Defekts gegeben ist, wenn die Messanordnung bei unterschiedlichen Temperaturen betrieben wird.

Gemäß einer Ausführungsform der Messanordnung ist die Auswerteeinrichtung außerhalb des Behälters angeordnet. Eine solche Anordnung hat den Vorteil, dass die Auswerteinrichtung selbst nicht den speziellen Bedingungen in dem Behälter genügen muss, sondern in herkömmlicher Weise ausgeführt sein kann.

Gemäß einer weiteren Ausführungsform der Messanordnung ist die Auswerteeinrichtung mit den Sensorelementen kapazitiv und/oder induktiv gekoppelt.

Dies hat den Vorteil, insbesondere wenn die Auswerteeinrichtung außerhalb des Behälters angeordnet werden soll, dass keine besonderen Vorkehrungen an dem Behälter getroffen werden müssen, wie beispielsweise eine Kabeldurchführung. Somit wird eine Integrität des Behälters nicht gestört. Das ist besonders vorteilhaft bei Behältern, die großem Druck und/oder hohen Temperaturschwankungen ausgesetzt sind. Die ist insbesondere bei kryogenen Behältern der Fall.

Gemäß einer weiteren Ausführungsform der Messanordnung umfasst diese eine Speichereinrichtung zur Speicherung von Sammelwiderstandswerten und/oder Referenzwiderstandswerten.

Mittels der Speichereinrichtung können somit Widerstandswerte gespeichert und für einen späteren Abruf vorgehalten werden. Die Auswerteeinrichtung ist dann dazu konfiguriert, auf gespeicherte Widerstandswerte zuzugreifen und auf Basis der gespeicherten Widerstandswerte Berechnungen durchzuführen. Derartige Berechnungen sind insbesondere das Ermitteln der Füllhöhe oder der Lage des Flüssigkeitsspiegels in dem Behälter.

Gemäß einer weiteren Ausführungsform der Messanordnung ist zumindest eines der Sensorelemente als eine Leuchtdiode ausgebildet.

Leuchtdioden haben zum Beispiel den Vorteil, dass gleichzeitig mit der Füllstandsmessung eine Beleuchtung des Innenraumes des Behälters erfolgen kann. Insofern kann ferner eine visuelle Beobachtung erfolgen. Die Dioden ermöglichen also eine elektrische Messung des Flüssigkeitsspiegels und anderseits eine durch die Beleuchtung ermöglichte optische oder visuelle Überwachung der Grenzfläche zwischen der flüssigen und gasförmigen Phase.

Es kann auch vorgesehen sein, dass mehrere oder alle der Sensorelemente der Messanordnung als Leuchtdioden ausgebildet sind. Es ist weiterhin denkbar, dass unterschiedliche Leuchtdioden verwendet werden, wie beispielsweise rot leuchtende, blau leuchtende oder im infraroten leuchtende Leuchtdioden.

Gemäß einer weiteren Ausführungsform der Messanordnung ist die Messanordnung für einen Betrieb bei einer Temperatur im Bereich von -272°C bis 50°C, insbesondere - 250°C bis 50°C, insbesondere -200°C bis 50°C eingerichtet.

Dies ermöglicht es vorteilhaft, die Messanordnung zur Messung des Flüssigkeitsspiegels von kryogenen Flüssigkeiten, wie beispielsweise Helium, Stickstoff oder Sauerstoff, in einem Behälter zu verwenden.

In Ausführungsformen ist die Messanordnung ausgestaltet, Flüssigkeitsspiegel von flüssigem Helium (Siedepunkt 4,222 K = -268,928 °C), flüssigem Wasserstoff (Siedepunkt 20,268 K = -252,882 °C), flüssigem Stickstoff (Siedepunkt 77,35 K = -195,80 °C) und/oder flüssigem Sauerstoff (Siedepunkt 90,18 K = -182,97 °C) zu erfassen. Insofern sind die Sensorelemente vorzugsweise geeignet, in einer kryogenen Umgebung zwischen -269°C und -183°C betrieben zu werden.

Eine Verdrahtung der einzelnen Bauteile mittels Drahtabschnitte ist vorzugsweise mit einer entsprechenden Längenausdehnungsreserve ausgebildet sein. Das heißt, wenn ein entsprechender Drahtabschnitt abgekühlt wird und sich dadurch verkürzt, kann die Reserve diese Verkürzung kompensieren. Insofern wird insbesondere die Ausbildung der Messanordnung mit länglichen Bauteilen ermöglicht, die eine starke Längenausdehnung in Abhängigkeit der Temperatur aufweisen.

Gemäß einer weiteren Ausführungsform der Messanordnung ist die Messanordnung für einen Betrieb bei einem Druck im Bereich von 1 bis 36 bar, insbesondere 1 bis 18 bar, eingerichtet. Denkbar ist ein Einsatz in druckbetriebene Gasflaschen oder Tanks.

Dies gewährleistet insbesondere, dass aufgrund von Druckschwankungen, die beispielsweise bei einer Entnahme einer kryogenen Flüssigkeit aus einem Behälter auftreten, die Messanordnung intakt bleibt.

Hierfür ist es beispielsweise vorteilhaft, wenn die verwendeten Komponenten, wie die Sensorelemente, keine geschlossenen Hohlräume aufweisen oder allgemein keine kompressiblen Materialien in eingekapselten Bereichen aufweisen.

Gemäß einer weiteren Ausführungsform der Messanordnung ist eine erste Mehrzahl von Sensorelementen, welche auf einem Pfad zwischen dem ersten und dem zweiten Sensorelement angeordnet sind und miteinander in Reihe geschaltet sind, vorgesehen. Weiterhin ist eine zweite Mehrzahl von Sensorelementen, welche auf einem Pfad zwischen dem ersten und dem zweiten Sensorelement angeordnet und miteinander in Reihe geschaltet sind, vorgesehen. Weiterhin ist vorgesehen, dass die beiden Reihenschaltungen von Sensorelementen zueinander parallel geschalten sind und diese Anordnung mit der Auswerteinrichtung gekoppelt ist.

Eine derartige Anordnung von Sensorelementen bietet eine Redundanz in der Ausführung. Denn selbst wenn in einer der beiden in Reihe geschalteten Mehrzahl von Sensorelementen ein Defekt z.B. eines Sensorelements oder einer Verbindung zwischen zwei Sensorelementen auftritt, der zu einer Unterbrechung des Stromkreises führt, kann die verbleibende in Reihe geschaltete Mehrzahl von Sensorelementen noch immer zur Messung des Flüssigkeitsspiegel verwendet werden. Daher wird die Sicherheit und Zuverlässigkeit der Anordnung erhöht.

Die Auswerteinrichtung ist in diesem Fall zum Beispiel dazu eingerichtet, einen Defekt automatisch zu erkennen und zukünftige Messungen basierend auf dem Vorhandensein von nur einer Reihenschaltung von Sensorelementen auszuwerten.

Grundsätzlich ist es auch denkbar, mehr als zwei derartiger Reihenschaltungen von Sensorelementen zu verwenden, um eine noch höhere Ausfallsicherheit zu erreichen.

Gemäß einer weiteren Ausführungsform der Messanordnung ist vorgesehen, dass jeweils wenigstens zwei Sensorelemente parallel miteinander elektrisch verbunden sind und eine Gruppe formen. Eine Mehrzahl solcher Gruppen ist in einer Reihenschaltung elektrisch miteinander verbunden und die Gruppen sind auf einem Pfad zwischen dem ersten und dem zweiten Sensorelement angeordnet. Diese Anordnung ist mit der Auswerteinrichtung elektrisch verbunden.

Eine derartige Anordnung von Sensorelementen entspricht einer redundanten Anordnung. Durch die Parallelschaltung von jeweils zwei Sensorelementen bleibt die Messanordnung funktionsfähig, selbst wenn in jeder Gruppe ein Defekt auftritt.

Weiterhin ist es ermöglicht, mittels dieser Anordnung eine erhöhte Messgenauigkeit zu erzielen, indem die Sensorelemente jeder Gruppe zueinander leicht versetzt angeordnet werden. Die beiden Pfade können dazu beispielsweise parallel verlaufen.

Ein weiterer Aspekt der Erfindung ist ein Behälter zur Aufnahme eines Fluids mit der Messanordnung zur Messung eines Flüssigkeitsspiegels, insbesondere gemäß einer der vorhergehenden oder im Folgenden beschriebenen Ausführungsformen. Der Behälter ist insbesondere zur Aufnahme von verflüssigter und/oder gasförmiger Luft, verflüssigtem und/oder gasförmigem Stickstoff, verflüssigtem und/oder gasförmigem Sauerstoff, verflüssigtem und/oder gasförmigem Kohlenstoffdioxid und/oder einem verflüssigten und/oder gasförmigen Edelgas eingerichtet. In Ausführungsformen ist der Behälter ein Element einer Gasverflüssigungs- oder Luftzerlegungsanlage, welches zumindest teilweise oder zeitweise ein Fluid mit einem Flüssigkeitsspiegel aufweist.

Der kryogene Behälter ist insbesondere eine Kolonne, eine Passage, ein Wärmetauscherabschnitt oder ein Tank für kryogene Flüssigkeiten. Zum Beispiel werden verflüssigter Sauerstoff, Stickstoff oder auch Argon als kryogene Flüssigkeiten bei Temperaturen zwischen -180°C und -160°C verwendet.

Vorteilhafterweise ist ein solcher Behälter verschlossen, so dass das Fluid nicht entweichen kann. Der Behälter ist dann mit einer Entnahmevorrichtung ausgestattet, die es erlaubt, Fluid aus dem Behälter zu entnehmen. Ein solcher Behälter muss einem hohen Innendruck sowie großen Temperaturschwankungen standhalten. Derartige Behälter sind beispielsweise die Behälter der LITS 2 Baureihe von Linde.

Vorzugsweise sind die Elemente der Messanordnung, die innerhalb des Behälters angeordnet sind und mit den Fluid in Kontakt stehen, frei von organischen Verbindungen. Dadurch wird eine Verwendung der Messanordnung in einem Behälter mit Sauerstoff als Fluid ermöglicht. Insbesondere können Abschirmungen oder Verkapselungen vorgesehen sein, so dass keine organischen Komponenten in direkten Kontakt mit dem Fluid geraten.

Gemäß einer Ausführungsform sind in dem Behälter zumindest zwei, vorzugsweise drei, Messanordnungen, insbesondere gemäß einer der vorhergehenden oder im Folgenden beschriebenen Ausführungsformen, in dem Behälter angeordnet. Die Messanordnungen sind relativ zueinander insbesondere so angeordnet, dass eine Verkippung des Flüssigkeitsspiegels relativ zu dem Behälter bestimmbar ist. Insofern ist die Auswerteinrichtung eingerichtet, eine Differenzmessung durchzuführen.

Durch die Bestimmung des Flüssigkeitsspiegels beispielsweise an drei Punkten, wobei die drei Punkte durch die Lage des Flüssigkeitsspiegels an den Orten der jeweiligen Sensorelemente der Messanordnungen gegeben sind, wird eine Ebene definiert. Diese Ebene entspricht der Grenzfläche flüssig/gasförmig des Fluids in dem Behälter und somit des Flüssigkeitsspiegels. Insofern wird eine Erkennung der Ebene des Flüssigkeitsspiegels im Raum ermöglicht.

Ein weiterer Aspekt der Erfindung betrifft ein Verfahren zum Betreiben einer Messanordnung zur Messung eines Flüssigkeitsspiegels eines Fluids in einem Behälter. Die Messanordnung umfasst ein erstes Sensorelement, ein zweites Sensorelement und weitere Sensorelemente sowie eine Auswerteeinrichtung. Das Verfahren umfasst die Schritte: Ansteuern zumindest einer Auswahl der Sensorelemente, Bestimmen eines Widerstandswerts der angesteuerten Auswahl von Sensorelementen, und Ermitteln, in Abhängigkeit von zumindest zwei Referenzwiderstandswerten, des Flüssigkeitsspiegels in dem Behälter.

Mit diesem Verfahren ist es ermöglicht, den Flüssigkeitsspiegel eines Fluids in einem Behälter zu bestimmen.

Ansteuern bedeutet hierbei insbesondere, dass eine Spannung an die Auswahl von Sensorelementen angelegt wird. Diese Spannung ruft einen Stromfluss durch die Auswahl von Sensorelementen hervor, welcher von der Auswerteeinrichtung erfassbar ist und zur Bestimmung des Widerstandswerts der Auswahl von Sensorelementen verwendet wird.

Durch Vergleich mit zwei Referenzwiderstandswerten, wobei ein erster Referenzwiderstandswert einen Widerstandswert eines Sensorelementes in der Flüssigphase des Fluids und ein zweiter Referenzwiderstandswert einen Widerstandswert eines Sensorelementes in der Gasphase des Fluids angibt, kann der Flüssigkeitsspiegel ermittelt werden.

Gemäß einer Ausführungsform des Verfahrens umfasst dieses zudem wenigstens einen der Schritte: Ansteuern des ersten Sensorelements zum Bestimmen eines ersten Widerstandswerts als ein erster Referenzwiderstandswert, und Ansteuern des zweiten Sensorelements zum Bestimmen eines zweiten Widerstandswerts als ein zweiter Referenzwiderstandswert.

Diese beiden Verfahrensschritte können zusammengefasst auch als Eichung der Messanordnung bezeichnet werden.

Diese Ausführung ist besonders vorteilhaft, da der Betrieb der Messanordnung somit immer mit den aktuellen Betriebsbedingungen korreliert und daher unabhängig von einer eventuellen Abhängigkeit der Widerstandswerte von den Betriebsbedingungen ist. Beispielsweise ist der Widerstandswert von Sensorelementen häufig von der Absoluttemperatur abhängig. Da diese nicht konstant ist, kann sie bei einer Auswertung dennoch berücksichtigt werden. Wird eine Messanordnung ohne eine solche Eichung betrieben, müsste zusätzlich die aktuelle Temperatur gemessen und als Parameter der Auswerteeinrichtung bereitgestellt werden. Hinzu kommt, dass Temperaturkennlinien der verwendeten Sensorelemente vorliegen müssen. Dieser zusätzliche Aufwand kann durch eine Eichung eingespart werden.

Über dieses Beispiel hinaus berücksichtigt die Eichung automatisch alle Einflussfaktoren auf das Verhalten der Widerstände. Mögliche weitere Einflussfaktoren sind insbesondere der Druck und die Sorte des Fluids.

Gemäß einer weiteren Ausführungsform des Verfahrens, wenn die Messanordnung zusätzlich eine Speichereinrichtung aufweist, umfasst dieses zudem die Schritte: Bestimmen eines ersten Sammelwiderstandswerts zu einem ersten Zeitpunkt; Speichern des ersten Sammelwiderstandswerts mittels der Speichereinrichtung; Bestimmen eines zweiten Sammelwiderstandswerts zu einem späteren zweiten Zeitpunkt; und Vergleichen des gespeicherten ersten Sammelwiderstandswerts mit dem zweiten Sammelwiderstandswert.

Mit diesem Verfahren kann vorteilhaft festgestellt werden, ob in der Zeit zwischen den beiden Messungen Zeit ein Defekt in der Messanordnung, insbesondere in der elektrischen Verbindung der weiteren Sensorelemente oder in einem der Sensorelemente, aufgetreten ist.

Die Auswerteeinrichtung ist vorzugsweise eingerichtet ein Messverfahren wie zuvor und im Folgenden beschrieben durchzuführen.

Weitere mögliche Implementierungen der Vorrichtung und/oder des Verfahrens umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Vorrichtung und/oder des Verfahrens hinzufügen.

Weitere vorteilhafte Ausgestaltungen und Aspekte der Vorrichtung und/oder des Verfahrens sind Gegenstand der Unteransprüche sowie der im Folgenden beschriebenen Ausführungsbeispiele der Vorrichtung und/oder des Verfahrens. Im Weiteren werden die Vorrichtung und/oder das Verfahren anhand von bevorzugten Ausführungsformen unter Bezugnahme auf die beigelegten Figuren näher erläutert.

Fig. 1 zeigt eine schematische Darstellung eines Behälters mit einer ersten Ausführungsform einer Messanordnung zur Messung eines Flüssigkeitsspiegels in dem Behälter;

Fig. 2 zeigt ein schematisches Blockschaltbild der ersten Ausführungsform der Messanordnung;

Fig. 3 zeigt ein schematisches Blockschaltbild einer zweiten Ausführungsform der Messanordnung;

Fig. 4 zeigt ein schematisches Blockschaltbild einer dritten Ausführungsform der Messanordnung;

Fig. 5 zeigt ein schematisches Blockschaltbild einer vierten Ausführungsform der Messanordnung;

Fig. 6 zeigt ein schematisches Blockschaltbild einer fünften Ausführungsform der Messanordnung;

Fig. 7 zeigt eine schematische Darstellung eines Behälters mit einer sechsten Ausführungsform einer Messanordnung zur Messung eines Flüssigkeitsspiegels in dem Behälter;

Fig. 8 zeigt ein schematisches Diagramm einer Messkurve eines Flüssigkeitsspiegels in einem Behälter, ermittelt mit einer Messanordnung gemäß einer der Fig. 1 bis 7; und

Fig. 9 zeigt ein schematisches Blockschaltbild für den Verlauf eines Verfahrens zum Betrieb einer Messanordnung gemäß einer der Fig. 1 bis 7 zur Bestimmung eines Flüssigkeitsspiegels in einem Behälter.

In den Figuren sind gleiche oder funktionsgleiche Elemente mit den gleichen Bezugszeichen versehen, sofern nichts anderes angegeben ist.

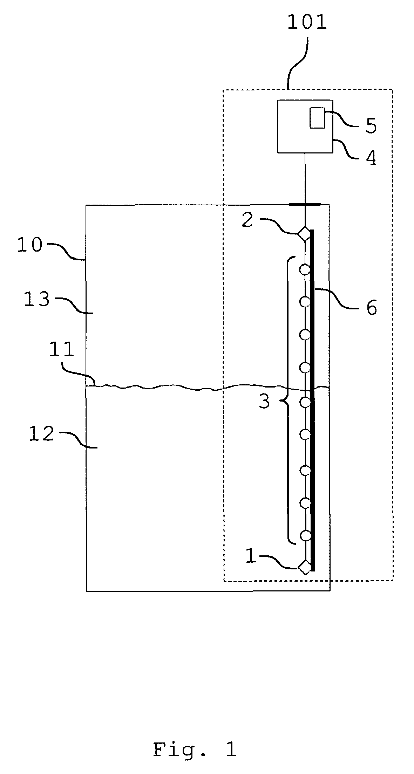

Fig. 1 zeigt eine schematische Darstellung eines Behälters 10 mit einer ersten Ausführungsform einer Messanordnung 101 zur Messung eines Flüssigkeitsspiegels 11 in dem Behälter 10. Die Messanordnung 101 der Fig. 1 umfasst ein erstes Sensorelement 1, ein zweites Sensorelement 2 sowie weitere Sensorelemente 3. Die Sensorelemente 1, 2, 3 sind auf einem geeigneten Substrat 6 fixiert. Weiterhin weist sie eine Auswerteeinrichtung 4 mit einer Speichereinrichtung 5 auf. Die Messanordnung 101 ist in der Fig. 1 von einem gestrichelten Kasten eingefasst, um die strukturelle Zusammengehörigkeit der Elemente klar darzustellen. Die auf dem Substrat 6 fixierten Sensorelemente 1, 2, 3 sind in dem Behälter 10 angeordnet. Die Auswerteeinrichtung 4 ist außerhalb des Behälters 10 angeordnet. Der Behälter 10 ist mit einem Fluid befüllt. Das Fluid weist eine flüssige Phase 12 sowie eine gasförmige Phase 13 auf, wobei die beiden Phasen durch den Flüssigkeitsspiegel 11 getrennt sind.

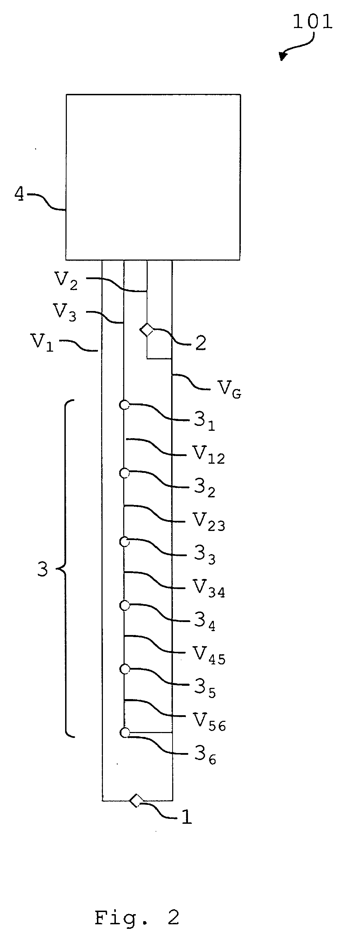

Die Sensorelemente 1, 2, 3 umfassen beispielsweise Widerstände, Dioden, Leuchtdioden und/oder als Temperatursensoren. Das erste Sensorelement 1 und das zweite Sensorelement 2 sind als Raute dargestellt, die weiteren Sensorelemente 3 sind als Kreise dargestellt. Diese Unterscheidung des ersten und zweiten Sensorelements 1, 2 von den weiteren Sensorelementen 3 soll andeuten, dass das erste und das zweite Sensorelement 1, 2 jeweils einzeln von der Auswerteeinrichtung 4 angesteuert werden kann. Alle Sensorelemente 1, 2, 3 sind vorzugsweise Sensorelemente 1, 2, 3 gleichen Typus, so dass von einem gleichen Verhalten, insbesondere in Bezug auf die Temperaturabhängigkeit der Widerstandswerte, ausgegangen werden kann. Die weiteren Sensorelemente 3 sind miteinander verbunden. Alle Sensorelemente 1, 2, 3 sind mit der Auswerteeinrichtung 4 gekoppelt. Die Kopplung in dem Beispiel der Fig. 1 ist galvanisch ausgeführt. Die Anordnung sowie die elektrische Verbindung der Sensorelemente 1, 2, 3 ist in der Fig. 1 nur angedeutet und stellt nicht eine tatsächlich vorliegende Anordnung dar. Konkrete Ausführungsbeispiele hierfür sind in den Fig. 2 - 6 dargestellt.

Das erste Sensorelement 1 ist an einem Boden des Behälters 10 angeordnet, so dass bei bestimmungsgemäßem Gebrauch des Behälters 10 dort bis zur vollständigen Entleerung des Behälters 10 das Fluid immer als Flüssigkeit 12 vorliegt. Entsprechend ist das zweite Sensorelement 2 an einer Decke des Behälters 10 angeordnet, so dass bei bestimmungsgemäßem Gebrauch des Behälters 10 dort bis zur vollständigen Befüllung des Behälters 10 das Fluid immer als Gas13 vorliegt. Die weiteren Sensorelemente 3 sind derart zwischen den Sensorelementen 1, 2 angeordnet, dass sie die gesamte Höhe des Behälters 10 überspannen. Der Flüssigkeitsspiegel 11 wird daher, bei bestimmungsgemäßem Gebrauch des Behälters 10, immer im Bereich der weiteren Sensorelemente 3 liegen.

Jedes der Sensorelemente 1, 2, 3 weist einen temperaturabhängigen intrinsischen Widerstandswert Ri auf. Wenn eine Temperaturkennlinie des verwendeten Typus der Sensorelemente 1, 2, 3 bekannt ist, kann daher von einem gemessenen Widerstandswert auf eine Temperatur geschlossen werden. Weiterhin erwärmen sich die Sensorelemente 1, 2, 3, wenn sie von einem Strom durchflossen werden, was eine Änderung des Widerstandswerts Ri gemäß der Temperaturkennlinie zur Folge hat. Das Ausmaß der Erwärmung hängt insbesondere von einem Wärmekontakt der Sensorelemente 1, 2, 3 mit dem umgebenden Fluid ab. Dies wird vorliegend auch als Kühlung durch das Fluid bezeichnet. Hierbei ist es von großer Bedeutung, ob das ein Sensorelement 1, 2, 3 umgebende Fluid flüssig 12 oder gasförmig 13 vorliegt, wobei es in der Flüssigphase 12 stärker kühlt als in der Gasphase 13. Dies hat zur Folge, dass sich diejenigen Sensorelemente 1, 2, 3, welche sich in der Gasphase 13 befinden, stärker erwärmen können. Bei konstantem Stromfluss und im thermischen Gleichgewicht werden diese daher einen Widerstandswert Rg aufweisen, welcher unterschiedlich zu einem Widerstandswert Rf derjenigen Sensorelemente 1, 2, 3 ist, welche sich in der Flüssigphase 12 befinden.

Besonders gut geeignet sind Sensorelemente 1, 2, 3, welche eine sehr starke Temperaturabhängigkeit aufweisen, da dann das Messsignal einen großen dynamischen Bereich abdeckt und somit eine große Messgenauigkeit erreicht werden kann.

Die Auswerteeinrichtung 4 ist dazu eingerichtet, jeweils einen Widerstandswert des ersten Sensorelements 1, zweiten Sensorelements 2 und der weiteren Sensorelemente 3 zu bestimmen. Der Widerstandswert des ersten Sensorelements 1 entspricht dabei dem Widerstandswert Rf in der Flüssigphase 12. Der Widerstandswert des zweiten Sensorelements 2 entspricht dabei dem Widerstandswert Rg in der Gasphase 13. Der Widerstandswert der weiteren Sensorelemente 3 entspricht einem Sammelwiderstandswert R3, der von der Verdrahtung der Sensorelemente 3 untereinander sowie dem Flüssigkeitsspiegel 11 abhängt.

Die Auswerteeinrichtung 4 der Fig. 1 weist ferner eine Speichereinrichtung 5 auf, welche geeignet ist, die Widerstandswerte Rf, Rg, R3 zu speichern und zur Verwendung bereitzustellen. Insbesondere ist die Speichereinrichtung 5 dazu eingerichtet, Referenzwiderstandswerte Rf, Rg zu speichern, wobei die Referenzwiderstandswerte Rf, Rg jeweils aktuell von der Auswerteeinrichtung 4 bestimmbar sind.

In einer Ausführungsform ist die Speichereinrichtung 5 dazu geeignet, eine zeitliche Folge von Widerstandswerten Rf, Rg, R3 zu speichern und bei Bedarf auszugeben. Dann speichert die Speichereinrichtung 5 mit jedem Widerstandswert Rf, Rg, R3 einen Zeitstempel, der den Zeitpunkt der Messung des Widerstandswerts Rf, Rg, R3 umfasst. Somit lässt sich von einer zeitlichen Änderung der Widerstandswerte Rf, Rg, R3 auch auf eine zeitliche Änderung des Flüssigkeitsspiegels 11 und/oder der Betriebsbedingungen, wie beispielsweise einen zeitlichen Temperaturverlauf in dem Behälter 10 schließen.

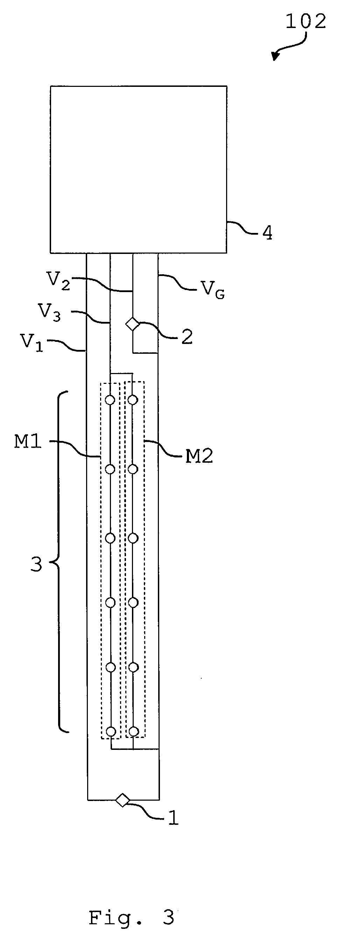

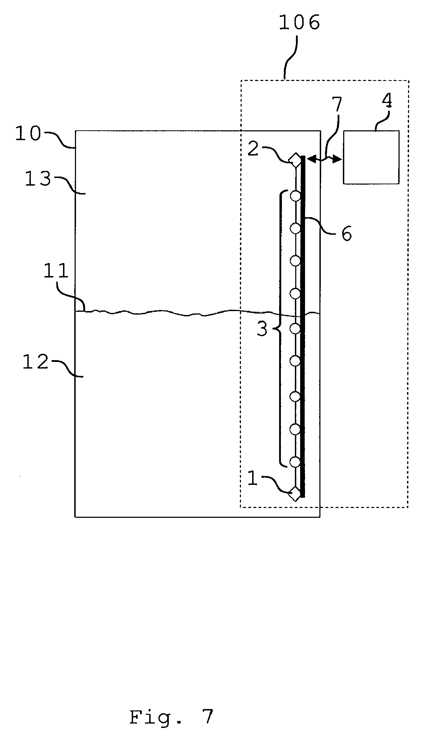

Fig. 2 zeigt ein schematisches Blockschaltbild der ersten Ausführungsform der Messanordnung 101. Die Messanordnung 101 umfasst ein erstes Sensorelement 1, ein zweites Sensorelement 2 sowie weitere Sensorelemente 3. In der Fig. 2 sind genau sechs Sensorelemente 3, $3_1$ bis $3_6$, dargestellt. Dies ist jedoch nur beispielhaft zu verstehen, im Allgemeinen können n Sensorelemente 3 verwendet werden. Ferner sind die weiteren Sensorelemente 3 in dem Beispiel gleichmäßig voneinander beabstandet dargestellt. Andere Anordnungen, insbesondere mit jeweils unterschiedlichem Abstand zwischen jeweils zwei Sensorelementen 3, sind vorstellbar. Dies gilt auch für alle weiteren Ausführungsbeispiele der Messanordnung der Fig. 3 - 6. Außerdem ist das in den Fig. 1 und 7 dargestellte Substrat 6 in der Fig. 2 sowie den Fig. 3 - 6 zur besseren Übersicht nicht dargestellt.

Weiterhin umfasst die Messanordnung 101 eine mit den Sensorelementen 1, 2, 3 gekoppelte Auswerteeinrichtung 4. In dem Beispiel der Fig. 2 sind die Sensorelemente 1, 2, 3 jeweils galvanisch mittels den Drahtabschnitten $V_1$, $V_2$, $V_3$ und $V_G$ mit der Auswerteeinrichtung 4 gekoppelt. Insbesondere sind das erste Sensorelement 1 und das zweite Sensorelement 2 einzeln durch die Auswerteeinrichtung 4 ansteuerbar. Die Auswerteeinrichtung 4 steuert die Sensorelemente 1, 2, 3 insbesondere durch ein anlegen eine Spannung an die Enden der Drahtabschnitte $V_1$, $V_2$, $V_3$ bzw. $V_G$ an.

In der Ausführungsform der Messanordnung 101 in der Fig. 2 sind die weiteren Sensorelemente 3 in einer Reihenschaltung mittels der Drahtabschnitte $V_{12}$ bis $V_{56}$ miteinander verbunden. Das heißt, dass ein Strom durch alle Sensorelemente $3_1$ bis $3_6$ fließen muss. Somit wird, wenn die Auswerteeinrichtung 4 die weiteren Sensorelemente 3 ansteuert, ein Sammelwiderstandswert R3 bestimmt, welcher dem Reihenwiderstand der in Reihe geschalteten Sensorelemente 3 entspricht. Der Sammelwiderstandswert R3 gemäß der Ausführungsform der Messanordnung 101 der Fig. 2 kann durch folgende Gleichung (1) beschrieben werden:

$$R3 = ng\ Rg + nf\ Rf, \qquad (1)$$

wobei ng die Anzahl der Sensorelemente 3, die sich in der Gasphase 13 befinden, nf die Anzahl der Sensorelemente 3, die sich in der Flüssigphase 12 befinden und n = ng + nf die Gesamtzahl der Sensorelemente 3 ist. Es kann somit von einer Messung des Sammelwiderstandswerts R3 auf den Flüssigkeitsspiegel 11 geschlossen werden.

Fig. 3 zeigt ein schematisches Blockschaltbild einer zweiten Ausführungsform der Messanordnung 102. Die Messanordnung 102 der Fig. 3 kann gemäß einer der Fig. 1 oder 7 in einem Behälter 10 zur Messung des Flüssigkeitsspiegels 11 eingesetzt werden. Die Messanordnung 102 unterscheidet sich von der Messanordnung 101 der Fig. 2 dadurch, dass die weiteren Sensorelemente 3 eine erste Mehrzahl M1 und eine zweite Mehrzahl M2 von Sensorelementen 3 umfassen. Der weitere Aufbau entspricht jenem der Messanordnung 101 der Fig. 2. Die erste Mehrzahl M1 und die zweite Mehrzahl M2 sind in der Fig. 3 durch einen gestrichelten Kasten eingefasst, um die strukturelle Zusammengehörigkeit zu verdeutlichen. Jede Mehrzahl M1, M2 von Sensorelementen 3 bildet für sich eine Reihenschaltung von Sensorelementen 3. Aus Gründen der Übersichtlichkeit wurden in der Fig. 3 die Bezeichnungen der einzelnen Sensorelemente 3 sowie der sie verbindenden Drahtabschnitte unterdrückt. In dem Beispiel der Fig. 3 ist die erste Mehrzahl M1 mit der zweiten Mehrzahl M2 parallel geschaltet. Diese Ausführungsform bietet eine redundante Ausführung. Die Auswerteeinrichtung 4 ist dazu eingerichtet, einen Sammelwiderstandswert R3 zu bestimmen, wobei der Sammelwiderstandswert R3 sich aus der Parallelschaltung der ersten Mehrzahl M1 und der zweiten Mehrzahl M2 ergibt. Der Sammelwiderstandswert R3 dieser Ausführungsform kann mit folgender Gleichung (2) berechnet werden:

$$R3 = 1/(1/(ng1\ Rg + nf1\ Rf) + 1/(ng2\ Rg + nf2\ Rf)) \qquad (2)$$

Hierbei ist ng1, ng2 die Anzahl der Sensorelemente 3 der ersten Mehrzahl M1 bzw. zweiten Mehrzahl M2 von Sensorelementen 3, die sich in der Gasphase 13 befinden und nf1, nf2 die Anzahl der Sensorelemente 3 der ersten Mehrzahl M1 bzw. zweiten Mehrzahl M2 von Sensorelementen 3, die sich in der Flüssigphase 12 befinden.

Sollte ein Defekt in der ersten Mehrzahl M1 oder in der zweiten Mehrzahl M2 von Sensorelementen 3 auftreten, so bleibt die Messanordnung 102 in dieser Ausführungsform funktionstüchtig, denn es bleibt zumindest eine Reihenschaltung von Sensorelementen 3 intakt. Dann kann der Sammelwiderstandswert R3 entsprechend der Gleichung (1) in der Beschreibung der Fig. 2 ermittelt werden.

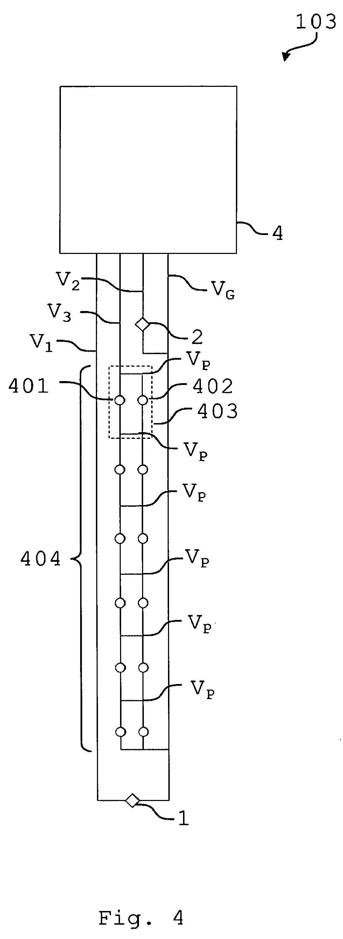

Fig. 4 zeigt ein schematisches Blockschaltbild einer dritten Ausführungsform der Messanordnung 103. Die Messanordnung 103 der Fig. 4 kann gemäß einer der Fig. 1 oder 7 in einem Behälter 10 zur Messung des Flüssigkeitsspiegels 11 eingesetzt werden. Die Messanordnung 103 unterscheidet sich von der Messanordnung 101 der Fig. 2 dadurch, dass die weiteren Sensorelemente 3 hier Gruppen 403 von jeweils zwei Sensorelementen 401, 402 umfassen, die zusammengenommen weitere Sensorelemente 404 bilden. Der weitere Aufbau der Messanordnung 103 entspricht jenem der Messanordnung 101 der Fig. 2. In der Fig. 4 ist die oberste Gruppe 403 durch einen gestrichelt dargestellten Kasten um die Sensorelemente 401, 402 dargestellt. Aus Gründen der Übersicht wurden die weiteren Gruppen 403 unterhalb dieser zuoberst dargestellten Gruppe 403 nicht in einen solchen Kasten eingefasst und die einzelnen Sensorelemente wurden nicht mit Bezugszeichen versehen. Die Sensorelemente 401, 402 sind mittels der Drahtabschnitte $V_P$ parallel zueinander geschaltet. Eine Mehrzahl 404 solcher Gruppen 403 ist in Reihe geschaltet. Die in Reihe geschalteten Gruppen 403 sind in ihrer Gesamtheit 404 parallel zu der Auswerteeinrichtung 4 geschaltet und mittels der Auswerteeinrichtung 4 ansteuerbar. Dieser Aufbau ermöglicht eine verbesserte Redundanz der Messanordnung 103, da, selbst wenn in jeder Gruppe 403 ein Defekt auftritt, die Messanordnung 103 funktionstüchtig bleibt. Der Sammelwiderstandswert R3 der in Reihe geschalteten Mehrzahl von Gruppen 403 kann mittels folgender Gleichung (3) berechnet werden:

$$R3 = kg\ (0.5\ Rg) + kf\ (0.5\ Rf) \qquad (3)$$

Dabei ist kg die Anzahl der Gruppen 403, die sich in der Gasphase 13 befinden und kf ist die Anzahl der Gruppen 403, die sich in der Flüssigphase 12 befinden. k = 0.5 n = kg + kf ist die Gesamtanzahl der Gruppen 403, wenn jede Gruppe 403 aus genau zwei Sensorelementen 401, 402 gebildet wird.

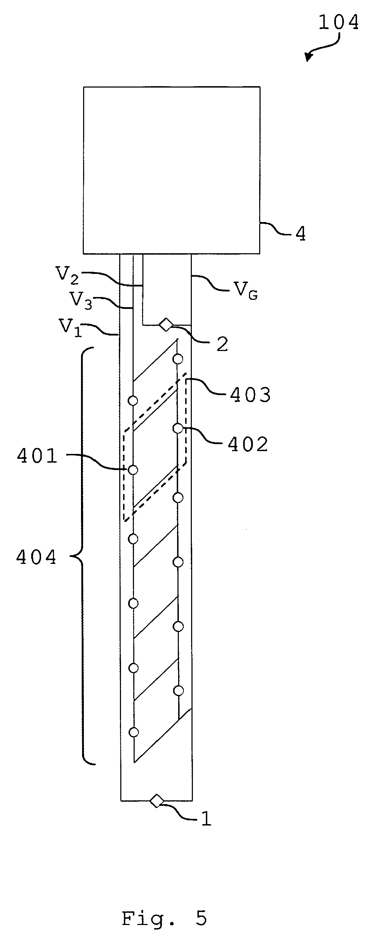

Fig. 5 zeigt ein schematisches Blockschaltbild einer vierten Ausführungsform der Messanordnung 104. Die Messanordnung 104 der Fig. 5 kann gemäß einer der Fig. 1 oder 7 in einem Behälter 10 zur Messung des Flüssigkeitsspiegels 11 eingesetzt werden. Die Messanordnung 104 unterscheidet sich von der Messanordnung 103 der Fig. 4 dadurch, dass die eine Gruppe 403 bildenden Sensorelemente 401, 402 zueinander versetzt angeordnet sind. Der weitere Aufbau der Messanordnung 104 entspricht jenem der Messanordnung 103 de Fig. 4. Wie schon in Fig. 4 ist nur die zuoberst dargestellte Gruppe 403 mit Bezugszeichen versehen, um die Darstellung einfach zu halten. Vorliegend bedeutet "versetzt zueinander" insbesondere, dass die Sensorelemente 401, 402 nicht auf der gleichen Höhe in dem Behälter 10 angeordnet sind. Mit dieser besonderen Anordnung der Sensorelemente 401, 402 ist eine verbesserte Auflösung bei der Messung des Flüssigkeitsspiegels 11 erzielbar.

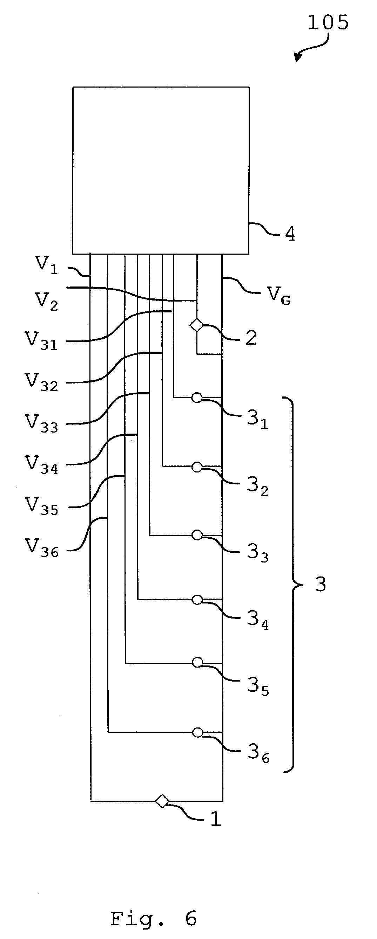

Fig. 6 zeigt ein schematisches Blockschaltbild einer fünften Ausführungsform der Messanordnung 105. Die Messanordnung 105 kann gemäß einer der Fig. 1 oder 7 in einem Behälter 10 zur Messung des Flüssigkeitsspiegels 11 eingesetzt werden. Die Messanordnung 105 unterscheidet sich von der Messanordnung 101 der Fig. 2 dadurch, dass die weiteren Sensorelemente 3, $3_1$ bis $3_6$, jeweils einzeln mittels den ihnen zugeordneten Drahtabschnitten $V_{31}$ bis $V_{36}$ ansteuerbar sind. Der weitere Aufbau der Messanordnung 105 entspricht jenem der Messanordnung 101 der Fig. 2. Die Messanordnung 105 ermöglicht es, einzelne defekte Sensorelemente 3 eindeutig zu identifizieren und bei Bedarf auszutauschen. Ferner ist hiermit vorteilhaft ermöglicht, insbesondere in der Gasphase 13 des Fluids, einen Temperaturverlauf als Funktion der Höhe in dem Behälter 10 zu ermitteln, sofern eine Temperaturkennlinie der Sensorelemente 3 bekannt ist.

Fig. 7 zeigt eine schematische Darstellung eines Behälters 10 mit einer sechsten Ausführungsform einer Messanordnung 106 zur Messung eines Flüssigkeitsspiegels 11 in dem Behälter 10. Wie schon in Fig. 1 sind die Sensorelemente 1, 2, 3 auf einem Substrat 6 fixiert und in dem Behälter 10 angeordnet. Ferner weist die Messanordnung 106 eine Auswerteeinrichtung 4 auf. Die Kopplung der Auswerteeinrichtung 4 mit den Sensorelementen 1, 2, 3 bei der Messanordnung 106 kapazitiv 7 und/oder induktiv 7 ausgeführt ist. Dies hat insbesondere den Vorteil, dass keine Durchführung eines Drahtabschnitts oder Kabels zur galvanischen Kopplung der Auswerteeinrichtung 4 mit den Sensorelementen 1, 2, 3 benötigt wird. Die Anordnung sowie die elektrische Verbindung der Sensorelemente 1, 2, 3 ist in der Fig. 7 nur angedeutet und stellt nicht eine tatsächlich vorliegende Anordnung dar. Konkrete Ausführungsbeispiele hierfür sind in den Fig. 2 - 6 dargestellt.

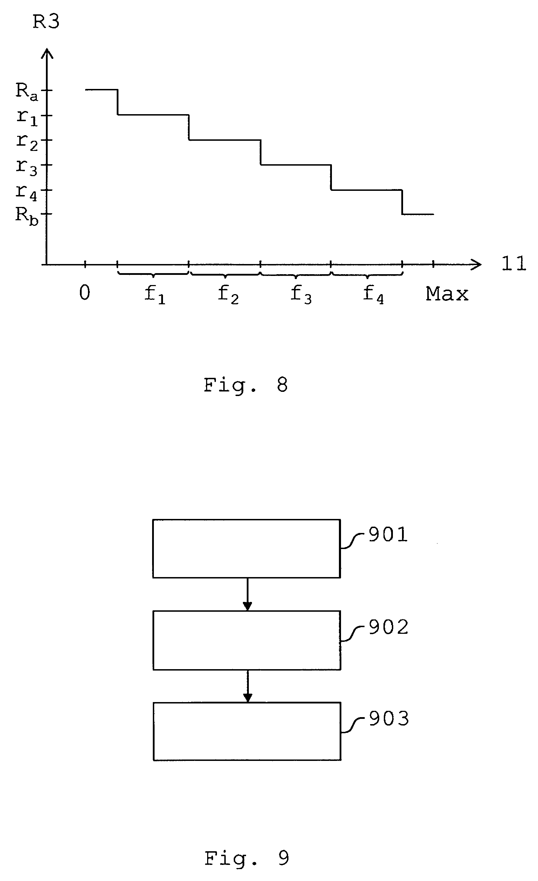

Fig. 8 zeigt ein schematisches Diagramm einer Messkurve eines Flüssigkeitsspiegels 11 in einem Behälter 10 in Abhängigkeit von einem Sammelwiderstandswert R3, ermittelt mit einer Messanordnung 101 bis 106 gemäß einer der Fig. 1 bis 7. Das Diagramm umfasst eine horizontale Achse, die den Flüssigkeitsspiegel 11 darstellt, und eine vertikale Achse, die den Sammelwiderstandswert R3 darstellt. Eine derartige Messkurve ist beispielsweise mit einer der Ausführungsformen der Messanordnung 101 bis 106 gemäß einer der Fig. 2 - 6 in einer Anordnung in einem Behälter 10 gemäß einer der Fig. 1 oder 6 messbar. In dem Beispiel der Fig. 8 ergibt sich bei hohem Flüssigkeitsspiegel 11 des Fluids in dem Behälter 10 ein geringer Sammelwiderstandswert Ra und bei geringem Flüssigkeitsspiegel 11 des Fluids in dem Behälter 10 ein höherer Sammelwiderstandswert Rb. Die Relation der Widerstandswerte Ra, Rb zueinander hängt von den verwendeten Sensorelementen 3 ab. Insbesondere ergibt sich ein geringerer Wert von Ra gegenüber Rb, wenn die Sensorelemente 3 Kaltleiter sind und es ergibt sich ein größerer Wert von Ra gegenüber Rb, wenn die Sensorelemente 3 Heißleiter sind. Kaltleiter sind solche Sensorelemente 1, 2, 3, die bei einer geringeren Temperatur einen kleineren Widerstandswert aufweisen als bei einer höheren Temperatur. Heißleiter sind solche Sensorelemente, die bei einer höheren Temperatur einen geringeren Widerstandswert aufweisen als bei einer geringeren Temperatur.

Die beiden Widerstandswert sind mit einer Treppenfunktion verbunden, wobei jeweils diskrete Sammelwiderstandswerte Ra, r1 - r4, Rb einem Stand des Flüssigkeitsspiegels 11 von 0, f1 - f4, Max entsprechen.

Das Entstehen dieser Treppenfunktion kann mit einer Ausführungsform der Messanordnung 101 gemäß der Fig. 2 und bei Verwendung von Kaltleitern als Sensorelemente 3 folgendermaßen beschrieben werden: Bei hohem Flüssigkeitsspiegel 11 sind alle Sensorelemente 3 von der flüssigen Phase 12 des Fluids umgeben. Es ergibt sich daher ein Sammelwiderstandswert R3 von R3 = n Rf = Rb. Sinkt der Flüssigkeitsspiegel 11 unter das am obersten angeordnete Sensorelement der weiteren Sensorelemente 3, erhöht sich der Sammelwiderstandswert R3 um einen Wert, der einer Differenz der Widerstandswerte Rf, Rg in der flüssigen bzw. in der gasförmigen Phase 12, 13 entspricht: R3 = (n - 1)Rf + Rg = r4. Dies setzt sich fort, bis sich bei minimalem Flüssigkeitsspiegel 11 alle Sensorelemente 3 in der Gasphase 13 befinden und der Sammelwiderstandswert R3 = n Rg = Ra ist.

In dem Beispiel der Fig. 8 ist die Treppenfunktion überdeutlich dargestellt. In einem tatsächlichen Anwendungsfall wird die Treppenfunktion nicht so deutlich sein. Insbesondere kann durch eine spezifische Anordnung der Sensorelemente 3, wie beispielsweise in der Fig. 5 dargestellt, eine feinere Abstufung erhalten werden. Ferner wird eine Wärmekopplung der Sensorelemente 3 an das Fluid auch mittels des Substrats 6 sowie der Verdrahtung $V_1$ - $V_G$ gegeben sein.

Fig. 9 zeigt ein schematisches Blockschaltbild für den Verlauf eines Verfahrens zum Betrieb einer Messanordnung 101 - 106 gemäß einer der Fig. 1 - 8. Das Verfahren umfasst mehrere Schritte. In Schritt 901 steuert die Auswerteeinrichtung 4 zumindest eine Auswahl von Sensorelementen 1, 2, 3 mit einer Spannung an. Dies hat einen Stromfluss durch die angesteuerte Auswahl von Sensorelementen 1, 2, 3 zur Folge. In Schritt 902 bestimmt die Auswerteeinrichtung 4 einen Widerstandswert der angesteuerten Auswahl von Sensorelementen 1, 2, 3. In Schritt 803 ermittelt die Auswerteeinrichtung 4 den Flüssigkeitsspiegel 11 in dem Behälter 10. Dies erreicht die Auswerteeinrichtung 4 insbesondere durch einen Vergleich des in Schritt 902 bestimmten Widerstandswerts mit Referenzwiderstandswerten Rf, Rg, wobei die Referenzwiderstandswerte Rf, Rg in einer Speichereinrichtung 5 gespeichert sein können.

Zusätzlich zu den genannten Schritten kann das Verfahren einen weiteren Schritt umfassen, in welchem der Widerstandswert des ersten Sensorelements 1 und/oder des zweiten Sensorelements 2 als der Referenzwiderstandswert Rf, Rg ermittelt wird.

Zusätzlich zu den genannten Schritten kann das Verfahren einen weiteren Schritt umfassen, in welchem ein aktuell gemessener Sammelwiderstandswert R3 mit einem zu einem vorhergehenden Zeitpunkt gemessenen Sammelwiderstandswert R3 verglichen wird. Aus einem solchen Vergleich kann festgestellt werden, ob in der zwischen den beiden Messungen verstrichenen Zeit ein Defekt in der Messanordnung 101 - 106, insbesondere in der elektrischen Verbindung der weiteren Sensorelemente 3, aufgetreten ist.

Bezugszeichenliste

| 1 | erstes Sensorelement |
| 2 | zweites Sensorelement |
| 3 | weitere Sensorelemente |
| $3_1$ | weiteres Sensorelement |
| $3_2$ | weiteres Sensorelement |
| $3_3$ | weiteres Sensorelement |
| $3_4$ | weiteres Sensorelement |
| $3_5$ | weiteres Sensorelement |
| $3_6$ | weiteres Sensorelement |
| 4 | Auswerteeinrichtung |
| 5 | Speichereinrichtung |
| 6 | Substrat |
| 7 | kapazitive/induktive Kopplung |
| 10 | Behälter |
| 11 | Flüssigkeitsspiegel |
| 12 | Flüssigphase |
| 13 | Gasphase |
| 101 | Ausführungsform der Messanordnung |
| 102 | Ausführungsform der Messanordnung |
| 103 | Ausführungsform der Messanordnung |
| 104 | Ausführungsform der Messanordnung |
| 105 | Ausführungsform der Messanordnung |
| 106 | Ausführungsform der Messanordnung |
| 401 | Sensorelement |
| 402 | Sensorelement |
| 403 | Gruppe von Sensorelementen |
| 404 | Mehrzahl von Gruppen von Sensorelementen |
| 901 | Verfahrensschritt |
| 902 | Verfahrensschritt |
| 903 | Verfahrensschritt |
| f1 | Flüssigkeitsspiegel 1 |
| f2 | Flüssigkeitsspiegel 2 |
| f3 | Flüssigkeitsspiegel 3 |
| f4 | Flüssigkeitsspiegel 4 |
| k | Anzahl von Gruppen von Sensorelementen |
| M1 | Mehrzahl von weiteren Sensorelementen |
| M2 | Mehrzahl von weiteren Sensorelementen |
| n | Anzahl von weiteren Sensorelementen |
| nf | Anzahl von weiteren Sensorelementen in der Flüssigphase |
| ng | Anzahl von weiteren Sensorelementen in der Gasphase |
| r1 | Sammelwiderstandswert bei Flüssigkeitsspiegel f4 |
| r2 | Sammelwiderstandswert bei Flüssigkeitsspiegel f3 |
| r3 | Sammelwiderstandswert bei Flüssigkeitsspiegel f2 |
| r4 | Sammelwiderstandswert bei Flüssigkeitsspiegel f1 |
| Ra | Sammelwiderstandswert bei Flüssigkeitsspiegel 0 |

Rb     Sammelwiderstandswert bei Flüssigkeitsspiegel Max
Rf     Widerstandswert eines Sensorelements in der Flüssigphase
Rg    Widerstandswert eines Sensorelements in der Gasphase
Ri     temperaturabhängiger intrinsischer Widerstandswert eines Sensorelements

$V_1$     Drahtabschnitt
$V_2$     Drahtabschnitt
$V_3$     Drahtabschnitt
$V_{12}$    Drahtabschnitt
$V_{23}$    Drahtabschnitt
$V_{34}$    Drahtabschnitt
$V_{45}$    Drahtabschnitt
$V_{56}$    Drahtabschnitt
$V_{31}$    Drahtabschnitt
$V_{32}$    Drahtabschnitt
$V_{33}$    Drahtabschnitt
$V_{34}$    Drahtabschnitt
$V_{35}$    Drahtabschnitt
$V_{36}$    Drahtabschnitt
$V_P$     Drahtabschnitt

## Patentansprüche

1.    Messanordnung (101 - 106) zur Messung eines Flüssigkeitsspiegels (11), welcher eine Flüssigphase (12) von einer Gasphase (13) eines Fluids trennt, in einem Behälter (10), mit:

> einem ersten Sensorelement (1),
> einem zweiten Sensorelement (2),
> weiteren Sensorelementen (3), welche auf einem Pfad zwischen dem ersten Sensorelement (1) und dem zweiten Sensorelement (2) angeordnet sind, und mit einer mit den Sensorelementen (1, 2, 3) gekoppelte Auswerteeinrichtung (4), wobei
> die Sensorelemente (1, 2, 3) jeweils einen temperaturabhängigen elektrischen Widerstand (Ri) aufweisen und ein Stromfluss durch ein jeweiliges Sensorelement (1, 2, 3) zu einer Erwärmung desselben führt,
> das erste Sensorelement (1), das zweite Sensorelement (2) und die weiteren Sensorelemente (3) in dem Behälter (10) derart anordenbar sind, dass sich der Flüssigkeitsspiegel (11) in dem Behälter (10) bei bestimmungsgemäßem Gebrauch zwischen dem ersten Sensorelement (1) und dem zweiten Sensorelement (2) befindet,
> die Auswerteeinrichtung (4) zur Messung zumindest eines Sammelwiderstandswerts (R3) von zumindest einer Auswahl der auf einem Pfad angeordneten Sensorelemente (3) eingerichtet ist, und
> die Auswerteeinrichtung (4) dazu eingerichtet ist, in Abhängigkeit von dem Sammelwiderstandswert (R3), einem Widerstandswert (Rf) des ersten, in der Flüssigphase (12) angeordneten Sensorelements (1), und einem Widerstandswert (Rg) des zweiten, in der Gasphase (13) angeordneten Sensorelements (2), den Flüssigkeitsspiegel (11) zu ermitteln.

2.    Messanordnung nach Anspruch 1, wobei die Auswerteeinrichtung (4) außerhalb des Behälters (10) angeordnet ist.

3.    Messanordnung nach Anspruch 1 oder 2, wobei die Auswerteeinrichtung (4) mit den Sensorelementen (1, 2, 3) kapazitiv und/oder induktiv gekoppelt ist.

4.    Messanordnung nach einem der vorhergehenden Ansprüche, ferner aufweisend eine Speichereinrichtung (5) zur Speicherung des Sammelwiderstandswerts (R3) und/oder des Widerstandswerts (Rf) des ersten Sensorelements (1) und/oder des Widerstandswerts (Rg) des zweiten Sensorelements (2).

5.    Messanordnung nach einem der vorhergehenden Ansprüche, wobei zumindest eines der Sensorelemente (1, 2, 3) eine Leuchtdiode ist.

6.    Messanordnung nach einem der vorhergehenden Ansprüche, wobei die Messanordnung für einen Betrieb bei einer Temperatur im Bereich von -272°C bis 50°C, insbesondere -250°C bis 50°C, insbesondere -200°C bis 50°C eingerichtet ist.

7.  Messanordnung nach einem der vorhergehenden Ansprüche, wobei die Messanordnung für einen Betrieb bei einem Druck im Bereich von 1 bis 36 bar, insbesondere 1 bis 18 bar eingerichtet ist.

8.  Messanordnung nach einem der vorhergehenden Ansprüche, wobei eine erste Mehrzahl von Sensorelementen (3), welche auf einem Pfad zwischen dem ersten und dem zweiten Sensorelement (1, 2) angeordnet sind und miteinander in Reihe geschaltet sind, mit einer zweiten Mehrzahl von Sensorelementen (3), welche auf einem Pfad zwischen dem ersten und dem zweiten Sensorelement (1, 2) angeordnet und miteinander in Reihe geschaltet sind, parallel geschaltet ist, und die erste und die zweite Mehrzahl von Sensorelementen (3) mit der Auswerteinrichtung (4) gekoppelt sind.

9.  Messanordnung nach einem der Ansprüche 1 bis 7, wobei jeweils wenigstens zwei Sensorelemente (401, 402) parallel miteinander elektrisch verbunden sind und eine Gruppe (403) formen, wobei eine Mehrzahl solcher Gruppen (403) in einer Reihenschaltung elektrisch miteinander verbunden sind, und wobei die Gruppen (403) auf einem Pfad zwischen dem ersten und dem zweiten Sensorelement (1, 2) angeordnet und mit der Auswerteeinrichtung (4) elektrisch verbunden sind.

10. Behälter (10) zur Aufnahme eines Fluids mit der Messanordnung zur Messung eines Flüssigkeitsspiegels (11) nach einem der vorhergehenden Ansprüche, wobei das Fluid verflüssigte und/oder gasförmige Luft, verflüssigter und/oder gasförmiger Stickstoff, verflüssigter und/oder gasförmiger Sauerstoff, verflüssigtes und/oder gasförmiges Kohlenstoffdioxid und/oder ein verflüssigtes und/oder gasförmiges Edelgas umfasst.

11. Behälter mit zumindest drei Messanordnungen nach einem der Ansprüche 1 bis 9, die in dem Behälter (10) derart angeordnet sind, dass eine Verkippung des Flüssigkeitsspiegels (11) relativ zu dem Behälter (10) bestimmbar ist.

12. Verfahren zum Betreiben einer Messanordnung zur Messung eines Flüssigkeitsspiegels (11) in einem Behälter (10), mit einem ersten Sensorelement (1), einem zweiten Sensorelement (2) und weiteren Sensorelementen (3) und mit einer Auswerteeinrichtung (4), mit den Schritten:

Ansteuern (901) zumindest einer Auswahl der Sensorelemente (1, 2, 3);
Bestimmen (902) eines Widerstandswerts (Rf, Rg, R3) der angesteuerten Auswahl der Sensorelemente (1, 2, 3); und
Ermitteln (903), in Abhängigkeit von dem Widerstandswert (R3) und zumindest zwei Referenzwiderstandswerten (Rf, Rg), des Flüssigkeitsspiegels (11) in dem Behälter (10).

13. Verfahren nach Anspruch 12, ferner umfassend die Schritte:

Ansteuern des ersten Sensorelements (1) zum Bestimmen eines ersten Widerstandswerts (Rf) als ein erster Referenzwiderstandswert (Rf); und
Ansteuern des zweiten Sensorelements (2) zum Bestimmen eines zweiten Widerstandswerts (Rg) als ein zweiter Referenzwiderstandswert (Rg).

14. Verfahren nach Anspruch 12 oder 13, ferner umfassend die Schritte:

Bestimmen eines ersten Sammelwiderstandswerts (R3) zu einem ersten Zeitpunkt;
Speichern des ersten Sammelwiderstandswerts (R3) in einer Speichereinrichtung (5);
Bestimmen eines zweiten Sammelwiderstandswerts (R3) zu einem zweiten Zeitpunkt; und
Vergleichen des gespeicherten ersten Sammelwiderstandswerts (R3) mit dem zweiten Sammelwiderstandswert (R3).

Fig. 1

101

4

$V_2$

$V_3$

$V_1$

2

$V_G$

$3_1$

$V_{12}$

$3_2$

$V_{23}$

$3_3$

$V_{34}$

$3_4$

$V_{45}$

$3_5$

$V_{56}$

$3_6$

3

1

Fig. 2

102

V₂

$V_2$

$V_G$

$V_3$

2

$V_1$

M1

M2

3

1

Fig. 3

103

$V_2$ $V_G$

$V_3$ 2

$V_1$ $V_P$

401 402

403

$V_P$

$V_P$

$V_P$

404

$V_P$

$V_P$

$V_P$

1

Fig. 4

104

V₂

V₃

V₁

V_G

2

403

402

401

404

1

Fig. 5

105

Fig. 6

Fig. 7

Fig. 8

Fig. 9

Europäisches
Patentamt

European
Patent Office

Office européen
des brevets

# EUROPÄISCHER RECHERCHENBERICHT

Nummer der Anmeldung

EP 16 00 0879

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2004 026396 A1 (ITW AUTOMOTIVE PROD GMBH & CO [DE]) 22. Dezember 2005 (2005-12-22) | 1,2,4,6,7,10-14 | INV. G01F23/24 |
| Y | * Absätze [0031], [0050] - [0053] * * Abbildungen 1-3,10-13 * ----- | 3,5 | |
| X | DE 31 25 633 A1 (LICENTIA GMBH [DE]) 13. Januar 1983 (1983-01-13) * Seite 7, Zeile 6 - Seite 8, Zeile 16 * * Abbildung 1 * ----- | 1,2,4,6,7,10,12-14 | |
| Y | DE 10 2007 005897 A1 (ENDRESS & HAUSER WETZER GMBH [DE]) 7. August 2008 (2008-08-07) * Absatz [0031] * * Abbildungen 1-3 * ----- | 3 | |
| Y | DE 39 40 853 A1 (BALZERS HOCHVAKUUM [LI]) 13. Juni 1991 (1991-06-13) * das ganze Dokument * ----- | 5 | |
| | | | RECHERCHIERTE SACHGEBIETE (IPC) |
| A | DE 197 33 830 A1 (KROMBERG & SCHUBERT [DE]) 11. Februar 1999 (1999-02-11) * Zusammenfassung; Abbildungen 1,2 * ----- | 8,9 | G01F |

Der vorliegende Recherchenbericht wurde für alle Patentansprüche erstellt

| Recherchenort | Abschlußdatum der Recherche | Prüfer |
|---|---|---|
| Den Haag | 10. Oktober 2016 | Kloppenburg, Martin |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 00 0879

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-10-2016

| Im Recherchenbericht angeführtes Patentdokument | Datum der Veröffentlichung | Mitglied(er) der Patentfamilie | Datum der Veröffentlichung |
|---|---|---|---|
| DE 102004026396 A1 | 22-12-2005 | DE 102004026396 A1<br>EP 1600747 A1<br>US 2005265425 A1 | 22-12-2005<br>30-11-2005<br>01-12-2005 |
| DE 3125633 A1 | 13-01-1983 | KEINE | |
| DE 102007005897 A1 | 07-08-2008 | KEINE | |
| DE 3940853 A1 | 13-06-1991 | DE 3940853 A1<br>EP 0487806 A1<br>US 5293896 A | 13-06-1991<br>03-06-1992<br>15-03-1994 |
| DE 19733830 A1 | 11-02-1999 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3125591 A1